# EUROPEAN PATENT APPLICATION

(11) **EP 3 503 421 A1**
(43) Date of publication of application: **26.06.2019**
(21) Application number: 17210353.3
(22) Date of filing: 22.12.2017
(51) Int. Cl.: H04B 7/026, H04B 7/0408, H04B 7/06, H04B 7/15

(54) **BASE STATION SYSTEM FOR TRANSMITTING DATA TOWARDS A USER ENTITY**

(71) Applicant: Deutsche Telekom AG, 53113 Bonn (DE)
(72) Inventor: Klatt, Axel, 50999 Köln (DE)
(74) Representative: Patentship Patentanwaltsgesellschaft mbH

(57) **Abstract**

The disclosure relates to a base station system for transmitting data towards a user entity (105) using beamforming in a communication cell. The base station system comprises: a multiple-in-multiple-out (MIMO) base station (101) that is configured to handle communications of the user entity (105) in the communication cell using beamforming; and a plurality of beamforming transmitters (103a-b), each beamforming transmitter (103a-b) being arranged spaced apart from the MIMO base station (101) in the communication cell, wherein the MIMO base station (101) is configured to select a beamforming transmitter (103a) from the plurality of beamforming transmitters (103a-b) and to transmit the data towards the selected beamforming transmitter (103a) using a first downlink transmission beam (104a) that is spatially directed towards the selected beamforming transmitter (103a); and wherein the selected beamforming transmitter (103a) is configured to receive the first downlink transmission beam (104a) with the data from the MIMO base station (101), and to forward the data towards the user entity (105) using a second downlink transmission beam (104b).

## Description

### TECHNICAL FIELD

In general, the present invention relates to the field of wireless communications. More specifically, the present invention relates to a base station system, a user entity and a corresponding method for transmitting data in a communication cell.

### BACKGROUND

To make use of available communication resources more efficiently, space diversity (also known as antenna diversity) can be used and being enhanced to the use of directional beams. For this purpose, a base station can use differently-oriented beams for communication with different user entities in the space dimension. Multiple Input Multiple Output (MIMO) Systems combine the transmission via multiple antenna elements and can create the above mentioned beams in a more selective manner. Such systems having a higher number of transmitting and receiving antenna elements are also referred to as Massive Multiple Input Multiple Output Systems (mMIMO).

However, a structural problem in the case of mMIMO communication with beamforming is transmission of data with validity over a large space segment, especially to the user entity which is not yet connected to the mobile radio system. In order to transmit the data using beamforming, several beams or beam movement can be deployed. Thereby, available space-diversity resources must be deployed for transmitting the data in different directions, which contradicts the space-diversity notion per se.

Another problem is the shading in the urban environment, which can be caused for example by buildings, trees or other obstacles between the user entity and base station therein. This problem can only be partially compensated by electromagnetic diffraction effects, in particular by increasing beam separation or resolution.

Furthermore, the state-of-the-art systems fail to provide seamless mobility support for the user entity and setting up further base stations is costly and hardly feasible. Although beam repeaters or beam reflectors are known from the prior art, they are merely used, for example, to compensate for delays of data transmission.

In light of the above, there is a need for an improved base station system, allowing transmitting data towards a user entity.

### SUMMARY OF THE INVENTION

It is an object of the disclosure to provide an improved base station system, allowing transmitting data towards a user entity.

The foregoing and other objects are achieved by the subject matter of the independent claims. Further implementation forms are apparent from the dependent claims, the description and the figures.

Generally, the disclosure relates to a multiple-in-multiple-out (MIMO) base station, a plurality of beamforming transmitters, and a user entity as well as a corresponding method for transmitting data more efficiently and reliably towards a user entity in a communication network. More specifically, embodiments of the present disclosure can utilize the plurality of urban-distributed beamforming transmitters, which are arranged spaced apart from and assigned to the actual MIMO base station of a cell, to transmit data of the associated cell in a decentralized manner to the user entity, such as a user equipment or a mobile phone or a vehicle communication system.

In particular, the MIMO base station can use one directional fixed beam for each transmitter, and then each transmitter can perform the adaptation of the actual "user beam" to the user entity, especially in shaded urban areas, such as street corners or urban canyons where streets are flanked by high buildings on both sides.

Thus, according to a first aspect the disclosure relates to a base station system for transmitting data towards a user entity using beamforming in a communication cell. The base station system comprises: a multiple-in-multiple-out (MIMO) base station that is configured to handle communications of the user entity in the communication cell using beamforming; and a plurality of beamforming transmitters, each beamforming transmitter being arranged spaced apart from the MIMO base station in the communication cellb wherein the MIMO base station is configured to select a beamforming transmitter from the plurality of beamforming transmitters and to transmit the data towards the selected beamforming transmitter using a first downlink transmission beam that is spatially directed towards the selected beamforming transmitter; and wherein the selected beamforming transmitter is configured to receive the first downlink transmission beam with the data from the MIMO base station, and to forward the data towards the user entity using a second downlink transmission beam.

An improved base station system is hence provided, allowing transmitting data towards a user entity in a more efficient and reliable manner.

In a further possible implementation form of the first aspect, each beamforming transmitter or the selected beamforming transmitter is configured to receive a first uplink transmission beam with user data from the user entity, and to forward the user data using a second uplink transmission beam spatially directed towards the base station.

Thereby, each beamforming transmitter or the selected beamforming transmitter can be provided to perform as a distributed PHY layer, which is similar to fronthaul for interconnecting the centralized radio access network (i.e., the base station here) with the remote radio heads.

In a further possible implementation form of the first aspect, the MIMO base station is configured to select the beamforming transmitter upon the basis of a link quality towards the user entity and/or upon the basis of a location of the beamforming transmitter or of a location of the user entity in the communication cell.

In a further possible implementation form of the first aspect, the link quality towards the user entity is described by one or a combination of the following parameters: a bit error rate, a bit rate, a packet error rate, a delay or a transmission power required for transmitting a transmission beam towards the user entity.

In a further possible implementation form of the first aspect, the MIMO base station is configured to select the beamforming transmitter which requires less transmission power for transmitting the transmission beam to the user entity than another beamforming transmitter from the plurality of beamforming transmitters.

Thereby, the data can be efficiently communicated across the entire communication cell with reduced transmission power by the selected beamforming transmitter.

In a further possible implementation form of the first aspect, each beamforming transmitter is associated with a coverage area, and the MIMO base station is configured to select the beamforming transmitter for transmitting the data towards the user entity which is associated with the coverage area in which the user entity is located.

Thus, a micro-coverage of the communication network can be achieved via the distributed transmitters, allowing positions of the user entity to be detected more precisely.

In a further possible implementation form of the first aspect, the MIMO base station is configured to select another beamforming transmitter as the selected transmitter for transmitting data towards the user entity if the user entity has moved towards a coverage area associated with the other beamforming transmitter.

Thereby, the transmitter, which provides a better reception to the user entity after the movement of the user entity, can handle the communication, allowing mobility support of the user entity.

In a further possible implementation form of the first aspect, each beamforming transmitter is configured to measure the link quality towards the user entity, or a beamforming transmitter is configured to receive a measured link quality from the user entity, and the respective beamforming transmitter is configured to send the measured link quality to the MIMO base station.

In a further possible implementation form of the first aspect, the selected beamforming transmitter is configured to receive a handover request from the user entity and to forward the handover request towards the MIMO base station, or the MIMO base station is configured to receive the handover request from the user entity, wherein the handover request indicates that a link quality between another beamforming transmitter and the user entity is higher than a link quality between the selected beamforming transmitter. The MIMO base station is configured to direct the other beamforming transmitter to set up a third downlink transmission beam towards the user entity and to transmit data towards the user entity using the third downlink transmission beam.

In a further possible implementation form of the first aspect, the MIMO base station is configured to direct the previously selected beamforming transmitter to terminate the second downlink transmission beam after the other beamforming transmitter has established the third downlink transmission beam.

In a further possible implementation form of the first aspect, a beamforming transmitter is arranged in an area of the communication cell which is shaded with respect to transmission beams originating from the MIMO base station.

Thereby, the data stream can efficiently be communicated across the area of the communication cell, in particular in shaded urban regions which are difficult to reach using beamforming.

In a further possible implementation form of the first aspect, the beamforming transmitter is configured to direct a fixed transmission beam towards a predetermined direction in order to provide connectivity to the user entity in the shaded area.

In a further possible implementation form of the first aspect, the MIMO base station and each beamforming transmitter are configured to handle communications in the communication cell using beamforming according to one of the following communication technologies: GSM, LTE, LTE-A, UMTS, HSPA, 3GPP, in particular 3GPP NR, New Radio, 5G or IEEE radio systems such as Wireless LAN, WiGig, or any of the evolutions and successors of these technologies.

In a further possible implementation form of the first aspect, the MIMO base station and each beamforming transmitter comprise a MIMO antenna, in particular a massive MIMO antenna according to the 5G technology, being configured to receive an uplink transmission beam from the user entity and to transmit a downlink transmission beam towards the user entity.

In a further possible implementation form of the first aspect, the respective MIMO antenna comprises an array of antenna elements, in particular at least 16 antenna elements, for generating a code beam, and wherein the MIMO base station and each beamforming transmitter are configured to generate a feed signal to the MIMO antenna for generating the first downlink transmission beam upon the basis of a predetermined MIMO codebook, in particular a MIMO codebook according to the 5G technology.

According to a second aspect, the disclosure relates to a user entity, in particular a smartphone or a car communication system, being capable of communicating with the base station system and receiving data from the base station system according to the first aspect, wherein the MIMO base station is configured to select a beamforming transmitter from the plurality of beamforming transmitters and to transmit the data towards the selected beamforming transmitter using a first downlink transmission beam that is spatially directed towards the selected beamforming transmitter and wherein the selected beamforming transmitter is configured to receive the first downlink transmission beam with the data from the MIMO base station and to forward the data towards the user entity using a second downlink transmission beam.

The user entity is configured to receive the data from the selected beamforming transmitter via the second downlink transmission beam.

The user entity can be further configured to establish a communication channel, in particular a random access control channel, towards the MIMO base station using beamforming and to receive data from the MIMO base station.

In a further possible implementation form of the second aspect, the user entity can comprise a beamforming antenna, in particular a MIMO antenna arrangement, for transmitting or receiving a communication beam towards the MIMO base station and/or the plurality of beamforming transmitters. The beamforming antenna can additionally be configured to receive a broadcast signal. Optionally, the user entity can comprise a broadcast antenna capable of receiving the broadcast signal.

In a further possible implementation form of the second aspect, the user entity is configured to identify at least one transmitter being associated with the MIMO base station.

According to a third aspect, the disclosure relates to a communication method for transmitting data towards a user entity in a communication network comprising a base station system, wherein the base station system comprises: a multiple-in-multiple-out (MIMO) base station configured to handle communications in a communication cell using beamforming and a plurality of beamforming transmitters being each arranged spaced apart from the MIMO base station in the communication cell.

The communication method comprises the following steps: selecting a beamforming transmitter from the plurality of beamforming transmitters and transmitting the data towards the selected beamforming transmitter using a first downlink transmission beam that is spatially directed towards the selected beamforming transmitter at the MIMO base station; receiving the first downlink transmission beam with the data from the MIMO base station and forwarding the data towards the user entity using a second downlink transmission beam at the selected beamforming transmitter; and receiving the data from the selected beamforming transmitter via the second downlink transmission beam at the user entity.

The communication method can be implemented using the system according to the first aspect.

Furthermore, the user entity of the second aspect can be configured to communicate with the base station system using the communication method of the third aspect.

Thus, an improved communication method is provided, allowing transmitting data towards a user entity in a more efficient and reliable manner.

According to a fourth aspect, the disclosure relates to a computer program comprising a computer readable program code which, when executed on the MIMO base station and/or the beamforming transmitters of the base station system according to the first aspect, and/or on the user entity according to the second aspect, performs the method according to the third aspect.

According to a fifth aspect, the disclosure relates to a omputer program product comprising the computer program according to the fourth aspect.

### BRIEF DESCRIPTION OF THE DRAWINGS

Further embodiments of the invention will be described with respect to the following figures, wherein:
Figure 1 shows a schematic diagram of a communication network comprising a base station, a plurality of beamforming transmitters and a user entity according to an embodiment;
Figure 2 shows a schematic diagram of a communication network comprising a base station, a plurality of beamforming transmitters and a user entity according to an embodiment;
Figure 3 shows a schematic diagram illustrating an exemplary handover procedure according to an embodiment;
Figure 4 shows a schematic diagram illustrating an exemplary handover procedure according to an embodiment; and
Figure 5 shows a diagram of a communication method for transmitting data according to an embodiment.

In the various figures, identical reference signs will be used for identical or at least functionally equivalent features.

### DETAILED DESCRIPTION OF EMBODIMENTS

In the following description, reference is made to the accompanying drawings, which form part of the disclosure, and in which are shown, by way of illustration, specific aspects in which the present invention may be placed. It will be appreciated that other aspects may be utilized and structural or logical changes may be made without departing from the scope of the present invention. The following detailed description, therefore, is not to be taken in a limiting sense, as the scope of the present invention is defined by the appended claims.

For instance, it will be appreciated that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures.

Moreover, in the following detailed description as well as in the claims, embodiments with different functional blocks or processing units are described, which are connected with each other or exchange signals. It will be appreciated that the present invention covers embodiments as well, which include additional functional blocks or processing units that are arranged between the functional blocks or processing units of the embodiments described below.

Finally, it is understood that the features of the various exemplary aspects described herein may be combined with each other, unless specifically noted otherwise.

The present disclosure is based on the recognition that the problems in the state-of-the-art systems can be solved by a plurality of urban-distributed beamforming transmitters, which are arranged spaced apart from and assigned to an actual base station of a cell. More specifically, these urban-distributed transmitters can transmit the data of the associated cell in a decentralized manner to a user entity, such as a user equipment or a mobile phone or a vehicle communication system. The base station can use one directional fixed beam for each transmitter and then each transmitter can perform the adaptation of the actual "user beam" to the user entity.

Furthermore, embodiments of the present disclosure can first use beamforming for data transport to the transmitters and then use the transmitters for data transport, especially in shaded urban areas, such as street corners or urban canyons where streets are flanked by high buildings on both sides. In this regard, solid beams spatially directed to the transmitters can be used, which is technically easier to implement by a static adjustment of the antenna parameters.

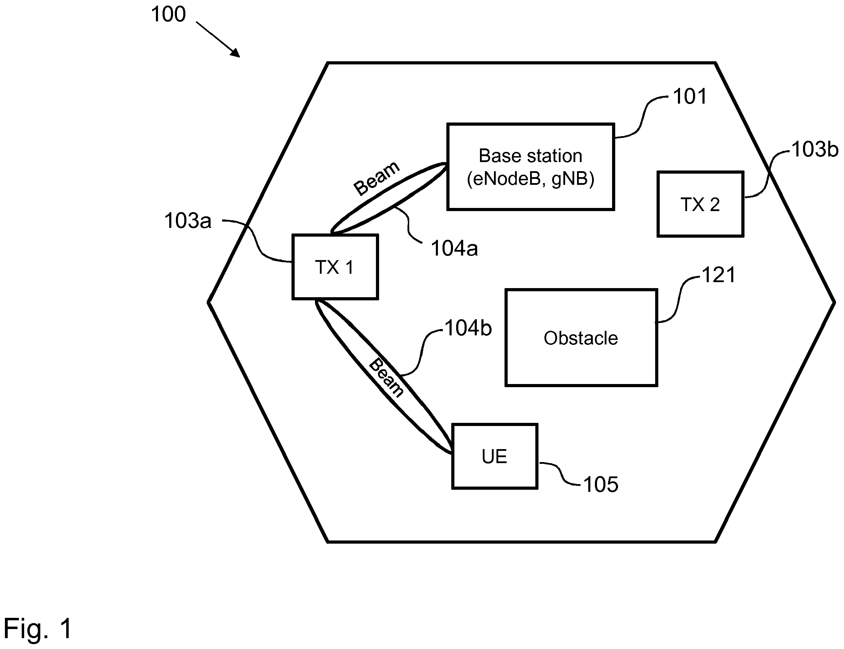

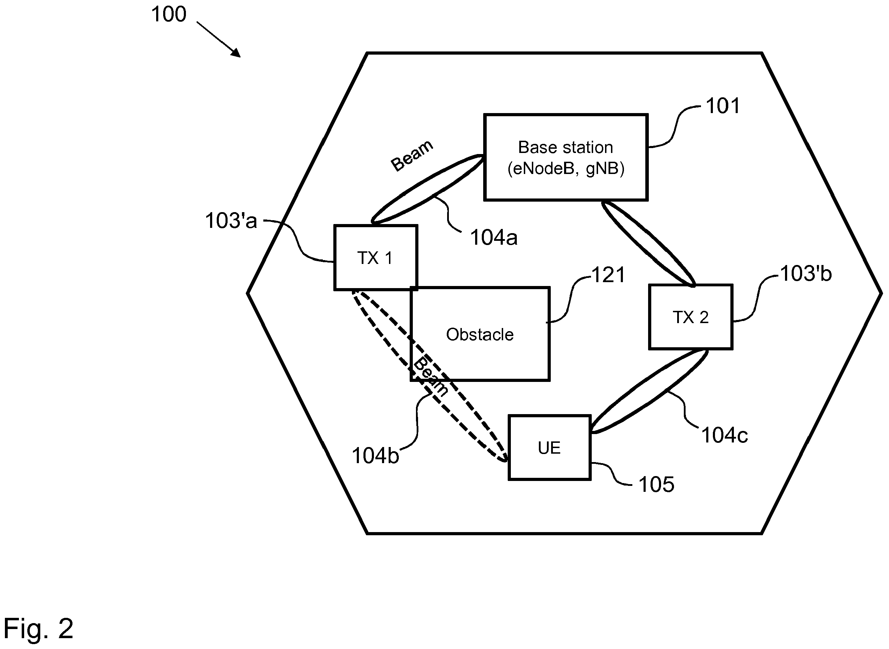

The system architecture for such a communication system will be further explained under reference to figures 1 and 2 in the following embodiments.

Figure 1 shows a schematic diagram of a communication network 100 according to an embodiment, wherein the communication network 100 comprises a multiple-in-multiple-out (MIMO) base station 101, a plurality of beamforming transmitters 103a-b in a communication cell, as well as a user entity 105 according to an embodiment, wherein the plurality of beamforming transmitters 103a-b are arranged spaced apart from the MIMO-base station 101 and also apart from each other in the communication cell.

The MIMO base station 101 and the plurality of beamforming transmitters 103a-b are configured to handle communications of the user entity 105 in the communication cell using beamforming according the fifth generation (5G) communication technology or even more advanced communication technology, such as one of the following communication technologies: GSM, LTE, LTE-A, UMTS, HSPA, 3GPP, in particular 3GPP NR, New Radio, 5G or IEEE radio systems such as Wireless LAN, WiGig, or any of the evolutions and successors of these technologies.

In an embodiment, the MIMO base station 101 and each beamforming transmitter 103a-b comprise a MIMO antenna, in particular a massive MIMO antenna according to the 5G technology, which is configured to receive an uplink transmission beam from the user entity 105 and to transmit a downlink transmission beam towards the user entity 105. Furthermore, the respective MIMO antenna comprises an array of antenna elements, in particular at least 16 antenna elements, for generating a code beam. The MIMO base station 101 and each beamforming transmitter 103a-b are configured to generate a feed signal to the MIMO antenna for generating a downlink transmission beam upon the basis of a predetermined MIMO codebook, in particular a MIMO codebook according to the 5G technology.

Furthermore, the MIMO base station 101 is configured to transmit the respective data towards the respective beamforming transmitter 103a-b using a dedicated beam which is spatially directed towards the respective transmitter 103a-b. Alternatively, the MIMO base station 101 and the respective transmitter 103a-b can be connected by a fixed communication network, in particular a glass fiber network.

As for the user entity 105, the user entity 105 may refer to a user equipment that provides a user with voice and/or data connectivity, a handheld device with a radio connection function, or another processing device connected to a radio modem. The user entity 105 may be wireless or mobile user equipment, such as a mobile phone, a vehicle communication system, and a computer with mobile user equipment, for example, may be a portable, pocket-sized, handheld, computer built-in, or in-vehicle mobile apparatus, which exchanges voice and/or data with the radio access network.

Furthermore, the user entity 105 can comprise a beamforming antenna, in particular a MIMO antenna arrangement, for transmitting or receiving a communication beam towards the MIMO base station 101 and the plurality of beamforming transmitters 103a-b. The beamforming antenna can additionally be configured to receive a broadcast signal. Optionally, the user entity 105 can comprise a broadcast antenna capable of receiving the broadcast signal.

According to an embodiment, each beamforming transmitter 103a-b is configured to measure a respective link quality towards the user entity 105, or each beamforming transmitter 103a-b is configured to receive a measured link quality from the user entity 105 via a first uplink transmission beam comprising user data. The respective beamforming transmitter 103a-b can then send the measured link quality to the MIMO base station 101 using a second uplink transmission beam spatially directed towards the MIMO base station 101.

The MIMO base station 101 is configured to select a beamforming transmitter 103a from the plurality of beamforming transmitters 103a-b upon the basis of the link quality towards the user entity 105 and/or upon the basis of a location of the beamforming transmitter 103a or of a location of the user entity 105 in the communication cell. The link quality towards the user entity 105 can be described by one or a combination of the following parameters: a bit error rate, a bit rate, a packet error rate, a delay or a transmission power required for transmitting a transmission beam towards the user entity 105.

As can be seen more closely from figure 1, an obstacle 121 such as a building is located between the TX2 transmitter 103b and the user entity 105 and hinders the communication between the TX2 transmitter 103b and the user entity 105. Therefore, the MIMO base station 101 can select the TX1 transmitter 103a in this case for transmitting the data towards the user entity 105.

In an embodiment, the MIMO base station 101 can alternatively select the beamforming transmitter which requires less transmission power for transmitting the transmission beam to the user entity 105 than another beamforming transmitter from the plurality of beamforming transmitters.

After selecting the TX1 transmitter 103a for data transmission, the base station 101 can transmit the data towards the selected beamforming transmitter 103a using a first downlink transmission beam 104a that is spatially directed towards the selected beamforming transmitter 103a. Next, the selected beamforming transmitter 103a is configured to receive the first downlink transmission beam 104a with the data from the MIMO base station 101 and to forward the data towards the user entity 105 using a second downlink transmission beam 104b.

According to the embodiments of the present disclosure, it is essential that the plurality of beamforming transmitter 103a-b are distributed and spaced apart from the base station 101. To avoid the shadowing effects caused by buildings, trees, or any other obstacles, each respective transmitter 103a-b can be further arranged to locate in an area of the communication cell that is shaded with respect for receiving transmission beams originating from the MIMO base station 101. The beamforming transmitter 103a-b can direct a fixed transmission beam towards a predetermined direction in order to provide connectivity to the user entity 105 in the shaded area.

Each beamforming transmitter 103a-b is associated with a coverage area and the MIMO base station 101 is configured to select the beamforming transmitter 103a-b for transmitting the data towards the user entity 105 which is associated with the coverage area in which the user entity 105 is located. If the user entity 105 has moved towards a coverage area associated with another new beamforming transmitter, the MIMO base station 105 is configured to select this new beamforming transmitter as the selected transmitter for transmitting data towards the user entity 105.

In this regard, the respective transmitter 103a-b can determine its location in the communication cell, in particular upon reception of a GPS signal, and each transmitter 103a-b is configured to transmit, for instance broadcast, its transmitter identification towards the MIMO base station 101.

As will be illustrated in figure 2 in the following, the respective beamforming transmitter 103'a-b can transmit its position/location information to the MIMO base station 101, and the MIMO base station 101 can thereby select that transmitter 103'b having a better connection link to the user entity 105 accordingly, depending on the position of the user entity 105. As a result, the beams can move along with the user entity 105, so that the transmitter 103'b, which provides a better reception to the user entity 105, handles the communication (handover).

Similar to figure 1, figure 2 shows a schematic diagram of a communication network 100 comprising a multiple-in-multiple-out (MIMO) base station 101, a beamforming TX1 transmitter 103'a and a beamforming TX2 transmitter 103'b in a communication cell according to an embodiment, as well as a user entity 105 according to an embodiment. The TX1 transmitter 103'a and the TX2 transmitter 103'b are arranged spaced apart from the MIMO-base station 101 and also apart from each other in the communication cell.

In comparison with figure 1, the obstacle 121 as shown in figure 2 is blocking the communication between the TX1 transmitter 103'a and the user entity 105. In such case, the previously selected beamforming TX1 transmitter 103'a (as selected above in figure 1) can receive a handover request from the user entity 105 and then forward the handover request towards the MIMO base station 101, or the MIMO base station 101 is configured to receive the handover request from the user entity 105, wherein the handover request indicates that a link quality between another beamforming transmitter (TX2) 103'b and the user entity 105 is higher than the link quality between the previously selected beamforming transmitter (TX1) 103'a.

After the MIMO base station 101 receives the handover request, the MIMO base station 101 is configured to direct the other beamforming transmitter (TX2) 103'b to set up a third downlink transmission beam 104c towards the user entity 105 and to transmit data towards the user entity 105 using the third downlink transmission beam 104c.

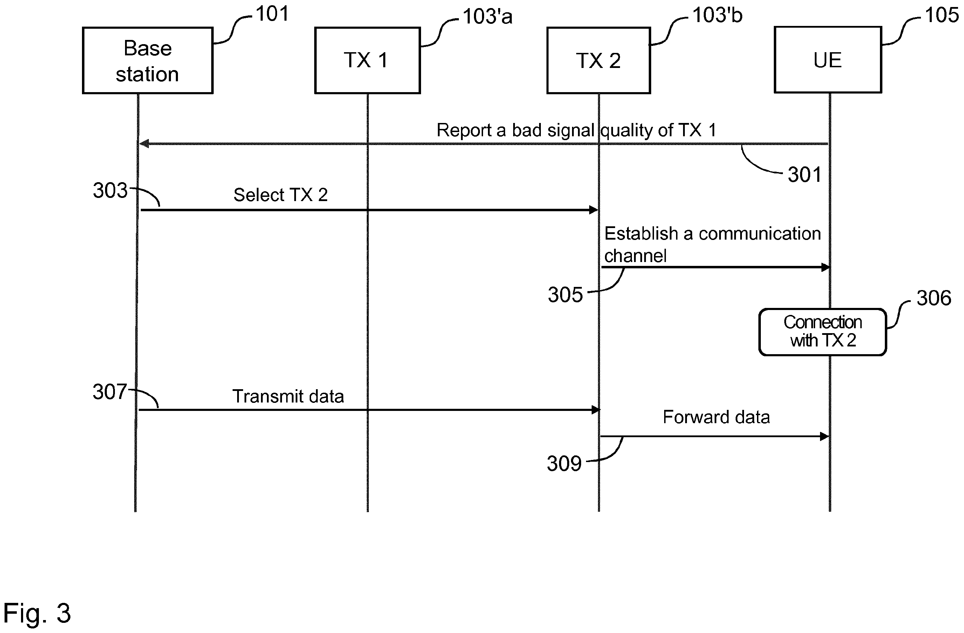

Furthermore, the MIMO base station 101 can direct the previously selected beamforming transmitter (TX1) 103'a to terminate the second downlink transmission beam 104b after the other beamforming transmitter (TX2) 103'b has established the third downlink transmission beam 104c. More details about this "handover" procedure are further described in the following figure 3.

Figure 3 shows a schematic diagram illustrating an exemplary handover procedure towards a user entity 105 between the plurality of beamforming transmitters 103'a-b according to an embodiment, wherein the connection quality between the user entity 105 and the TX1 transmitter 103'a becomes worse because of, for example, increasing shadowing effects, and wherein the base station 101 can connect to the user entity 105 via the TX2 transmitter 103'b instead of the TX1 transmitter 103'a. By way of illustration, the procedure shown in figure 3 comprises the following steps:

The user entity 105 reports a bad signal quality of the TX1 transmitter 103'a (step 301).

The base station 101 selects the TX2 transmitter 103'b for data transmission based on, for example, the position data (and in another embodiment based on the motion vector) of the user entity 105 (step 303).
The TX2 transmitter 103'b establishes a connection channel 104c to the user entity 105 (beam selection) while the user entity 105 continues to communicate with the TX1 transmitter 103'a (step 305).
The data is routed via the TX2 transmitter 103'b "seamlessly" after the beam establishment (step 306) between the TX2 transmitter 103'b and the user entity (steps 307, 309).

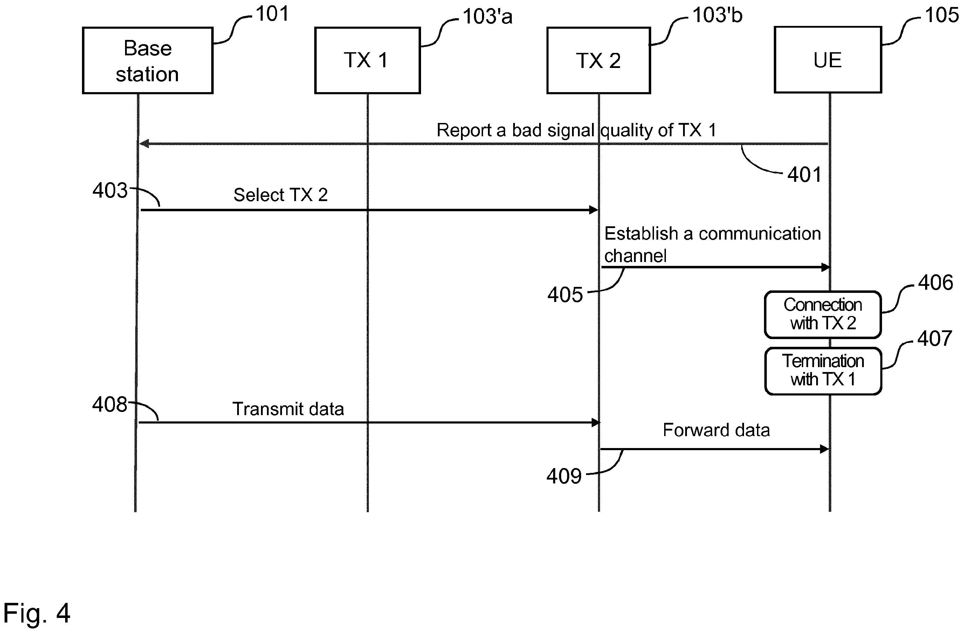

In a further embodiment, figure 4 shows an alternative handover procedure, which comprises the following steps:
The user entity 105 reports a good or even better signal quality of the TX2 transmitter 103'b (step 401).
The MIMO base station 101 selects the TX2 transmitter 103'b for data transmission, for example, on the basis of the position data (or in another embodiment, due to the motion vector) of the user entity 105 (step 403).
The TX2 transmitter 103'b establishes a channel 104c for communication to the user entity 105 (beam selection) while the user entity 105 can continue to communicate with the TX1 transmitter 103'a (step 405).
Finally, the data from the base station 105 will be transmitted by the TX2 transmitter 103'b only after a beam "termination" (step 407) between the TX1 transmitter 103'a and the user entity 105 (steps 408, 409).

The embodiments of the present disclosure offer in particular the following advantages: first of all, energy can be significantly saved because less transmission power is needed to supply shaded user entities 105. Furthermore, a micro-coverage of the communication network can be achieved via the distributed transmitters 103a-b, especially in shaded urban areas; positions of user entities 105 in a cell can also be detected more precisely. Thereby, embodiments of the present disclosure can provide the user entity 105 with mobility support. In particular, user prioritization can be achieved by providing a dedicated transmitter 103a-b at a building, thereby better reception within the building (e.g., additional broadcast).

Moreover, the repeaters, i.e. the distributed transmitters 103a-b, for transmitting data can additionally provide WLAN channels, which can make even better use of LTE or 5G resources. Finally, spatial diversity can also be better exploited by the locally-distributed transmitters 103a-b.

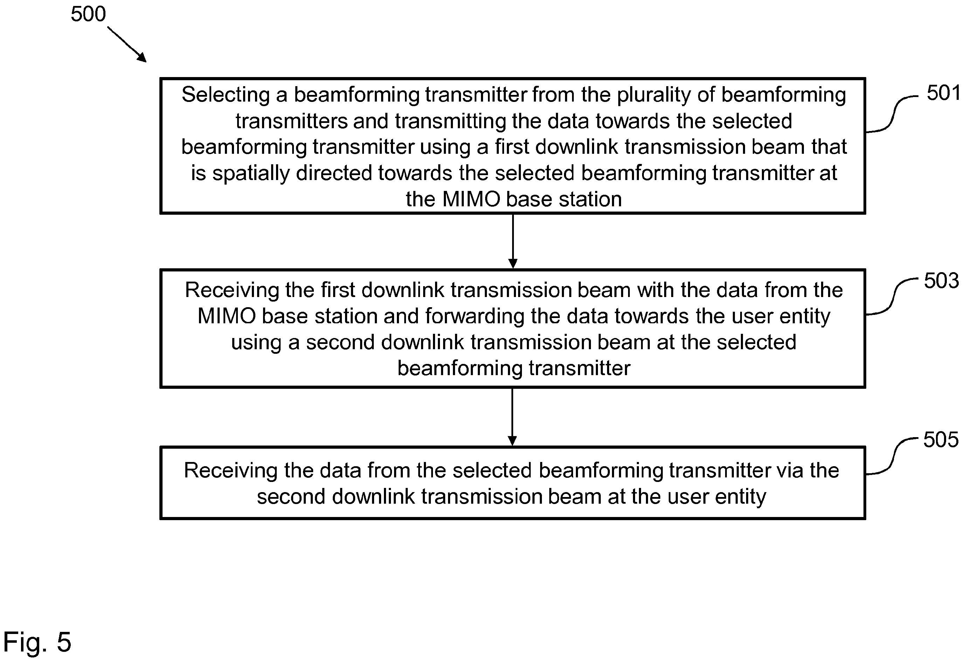

Figure 5 shows a diagram illustrating a corresponding communication method 500 for transmitting data towards a user entity 105 in a communication network comprising a base station system, wherein the base station system comprises: a multiple-in-multiple-out (MIMO) base station 101 configured to handle communications in a communication cell using beamforming and a plurality of beamforming transmitters 103a-b being each arranged spaced apart from the MIMO base station 101 in the communication cell.

The communication method 500 comprises the following steps: a first step 501 of selecting a beamforming transmitter 103a from the plurality of beamforming transmitters 103a-b and transmitting the data towards the selected beamforming transmitter 103a using a first downlink transmission beam 104a that is spatially directed towards the selected beamforming transmitter 103a at the MIMO base station 101; a second step 503 of receiving the first downlink transmission beam 104a with the data from the MIMO base station 101 and forwarding the data towards the user entity 105 using a second downlink transmission beam 104b at the selected beamforming transmitter 103a; and a third step 505 of receiving the data from the selected beamforming transmitter 103a via the second downlink transmission beam 104b at the user entity 105.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless of whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A base station system which is configured for transmitting data towards a user entity (105) using beamforming in a communication cell, the base station system comprising:
a multiple-in-multiple-out (MIMO) base station (101) that is configured to handle communications of the user entity (105) in the communication cell using beamforming;
a plurality of beamforming transmitters (103a-b; 103'a-b), each beamforming transmitter (103a-b; 103'a-b) being arranged spaced apart from the MIMO base station (101) in the communication cell; wherein
the MIMO base station (101) is configured to select a beamforming transmitter (103a) from the plurality of beamforming transmitters (103a-b; 103'a-b) and to transmit the data towards the selected beamforming transmitter (103a) using a first downlink transmission beam (104a) that is spatially directed towards the selected beamforming transmitter (103a); and wherein
the selected beamforming transmitter (103a) is configured to receive the first downlink transmission beam (104a) with the data from the MIMO base station (101), and to forward the data towards the user entity (105) using a second downlink transmission beam (104b).

2. The base station system according to claim 1, wherein each beamforming transmitter (103a-b; 103'a-b) or the selected beamforming transmitter (103a) is configured to receive a first uplink transmission beam with user data from the user entity (105), and to forward the user data using a second uplink transmission beam spatially directed towards the MIMO base station (101).

3. The base station system according to anyone of the preceding claims, wherein the MIMO base station (101) is configured to select the beamforming transmitter (103a) upon the basis of a link quality towards the user entity (105) and/or upon the basis of a location of the beamforming transmitter or of a location of the user entity (105) in the communication cell, or wherein the MIMO base station (105) is configured to select the beamforming transmitter (103a) which requires less transmission power for transmitting the transmission beam to the user entity (105) than another beamforming transmitter (103b) from the plurality of beamforming transmitters (103a-b; 103'a-b).

4. The base station system according to claim 3, wherein the link quality towards the user entity (105) is described by one or a combination of the following parameters: a bit error rate, a bit rate, a packet error rate, a delay or a transmission power required for transmitting a transmission beam towards the user entity (105).

5. The base station system according to anyone of the claims 3 or 4, wherein the MIMO base station (101) is configured to select another beamforming transmitter as the selected transmitter for transmitting data towards the user entity (105) if the user entity (105) has moved towards a coverage area associated with the other beamforming transmitter.

6. The base station system according to anyone of the claims 3 to 5, wherein each beamforming transmitter (103a-b; 103'a-b) is configured to measure the link quality towards the user entity (105), or wherein each beamforming transmitter (103a-b; 103'a-b) is configured to receive a measured link quality from the user entity (105), and wherein the respective beamforming transmitter (103a-b; 103'a-b) is configured to send the measured link quality to the MIMO base station (101).

7. The base station system according to anyone of the preceding claims, wherein the selected beamforming transmitter (103'a) is configured to receive a handover request from the user entity (105) and to forward the handover request towards the MIMO base station (101), or wherein the MIMO base station (101) is configured to receive the handover request from the user entity (105), the handover request indicating that a link quality between another beamforming transmitter (103'b) and the user entity (105) is higher than a link quality between the selected beamforming transmitter (103'a), wherein the MIMO base station (101) is configured to direct the other beamforming transmitter (103'b) to set up a third downlink transmission beam (104c) towards the user entity (105) and to transmit data towards the user entity (105) using the third downlink transmission beam (104c).

8. The base station system according to anyone of the preceding claims, wherein each beamforming transmitter (103a-b; 103'a-b) is arranged in an area of the communication cell which is shaded with respect to transmission beams originating from the MIMO base station (101).

9. The base station system according to claim 8, wherein the beamforming transmitter (103a-b; 103'a-b) is configured to direct a fixed transmission beam towards a predetermined direction in order to provide connectivity to the user entity (105) in the shaded area.

10. The base station system according to anyone of the preceding claims, wherein the MIMO base station (101) and each beamforming transmitter (103a-b; 103'a-b) are configured to handle communications in the communication cell using beamforming according to one of the following communication technologies: GSM, LTE, LTE-A, UMTS, HSPA, 3GPP, in particular 3GPP NR, New Radio, 5G or IEEE radio systems such as Wireless LAN, WiGig, or any of the evolutions and successors of these technologies.

11. The base station system according to anyone of the preceding claims, wherein the MIMO base station (101) and each beamforming transmitter (103a-b; 103'a-b) comprise a MIMO antenna, in particular a massive MIMO antenna according to the 5G technology, being configured to receive an uplink transmission beam from the user entity (105) and to transmit a downlink transmission beam towards the user entity (105).

12. A user entity (105) that is configured to communicate with and receive data from the base station system according to anyone of the preceding claims 1 to 15, the base station system comprising a multiple-in-multiple-out (MIMO) base station (101) and a plurality of beamforming transmitters (103a-b; 103'a-b), the MIMO base station (101) being configured to select a beamforming transmitter from the plurality of beamforming transmitters (103a-b; 103'a-b) and to transmit the data towards the selected beamforming transmitter (103a) using a first downlink transmission beam (104a) that is spatially directed towards the selected beamforming transmitter (103a), the selected beamforming transmitter (103a) being configured to receive the first downlink transmission beam (104a) with the data from the MIMO base station (101) and to forward the data towards the user entity (101) using a second downlink transmission beam (104b), the user entity (105) being configured to:
receive the data from the selected beamforming transmitter (103a) via the second downlink transmission beam (104b).
wherein each of the plurality of beamforming transmitters (103a-b; 103'a-b) is arranged spaced apart from the MIMO base station (101) in the communication cell.

13. A communication method (500) for transmitting data towards a user entity (105) in a communication network comprising a base station system, the base station system comprising: a multiple-in-multiple-out (MIMO) base station (101) configured to handle communications in a communication cell using beamforming and a plurality of beamforming transmitters (103a-b; 103'a-b) being each arranged spaced apart from the MIMO base station (101) in the communication cell, the communication method (500) comprising:
selecting (501) a beamforming transmitter (103a) from the plurality of beamforming transmitters (103a-b; 103'a-b) and transmitting the data towards the selected beamforming transmitter (103a) using a first downlink transmission beam (104a) that is spatially directed towards the selected beamforming transmitter (103a) at the MIMO base station (101);
receiving (503) the first downlink transmission beam (104a) with the data from the MIMO base station (101) and forwarding the data towards the user entity (101) using a second downlink transmission beam (104b) at the selected beamforming transmitter (103a); and
receiving (505) the data from the selected beamforming transmitter (103a) via the second downlink transmission beam (104b) at the user entity (105).

14. A computer program comprising a computer readable program code which, when executed on theMIMO base station (101) and/or the beamforming transmitter (103a-b; 103'a-b) of the base station system according to any one of the preceding claims 1 to 11, and/or on the user entity (105) according to claim 12, performs the method (500) according to claim 13.

15. A computer program product comprising the computer program according to claim 14.
